# EUROPÄISCHE PATENTANMELDUNG

(11) **EP 2 492 193 A2**
(43) Veröffentlichungstag der Anmeldung: **29.08.2012**
(21) Anmeldenummer: 12156784.6
(22) Anmeldetag: 24.02.2012
(51) Int. Cl.: B64C 27/33, B64C 27/35

(54) **Rotorblattkopplungsvorrichtung und Rotorkopf**

(30) Priorität: 28.02.2011 CH 3472011
(71) Anmelder: Marenco Swisshelicopter AG Engineering & Consulting, 8330 Pfäffikon (CH)
(72) Erfinder: Stucki, Martin, 8330 Pfäffikon (CH)
(74) Vertreter: Schneider Feldmann AG Patent- und Markenanwälte

(57) **Zusammenfassung**

Es wird eine Rotorblattkopplungsvorrichtung (9) mit einem torsionssteifen Träger (4) offenbar, wobei der Träger (4) fliehkraftfrei zwischen einem Drucklager (3) und einem Steuerlager (5) gelagert ist, wobei elastische Schlag- und Schwenkbewegungen der Rotorblattkopplungsvorrichtung (9) gedämpft erfolgen können. Die Rotorblattkopplungsvorrichtung (9) ist zwischen einem Rotorkopfstern (101) und einem Rotorkopfzentralstück (102) eingespannt und um die Rotorachse A rotierbar gehalten. Die auftretenden Fliehkräfte werden von einem Rotorblatthalter (2) auf den Rotorkopfstern (101) übertragen und damit vom Träger (4) ferngehalten.

## Beschreibung

### Technisches Gebiet

Die vorliegende Erfindung beschreibt eine Rotorblattkopplungsvorrichtung, umfassend einen Träger und einen daran befestigten Rotorblatthalter zur Aufnahme mindestens eines Rotorblattes.

### Stand der Technik

Gelenklose Rotorköpfe für Drehflügelflugzeuge, beispielsweise Helikopter oder Hubschrauber sind seit längerem bekannt. An einem Rotormast mit einer Rotorachse ist eine Mehrzahl von auftriebserzeugenden Rotorblättern über je eine Rotorblattkopplungsvorrichtung jeweils an einem Drehmomentübertragselement befestigt. Der Rotorkopf überträgt ein Drehmoment über die Rotorblattkopplungsvorrichtung auf die Rotorblätter.

Als Teil der Rotorblattkopplungsvorrichtung wird im Stand der Technik ein sogenannter "Flexbeam" eingesetzt. Dieser ist biegeweich und torsionsweich ausgeführt, wodurch die bei der Rotation auftretenden Schlag- und Schwenkbewegungen der Rotorblätter gedämpft werden können. Dabei treten die Schwenkbewegungen in der Rotationsebene der Rotorblätter und die Schlagbewegungen entsprechend in einer Ebene senkrecht zur Rotationsebene der Rotorblätter auf.

Der "Flexbeam" ist indirekt einerseits mit dem Rotorkopf und andererseits mit dem Rotorblatt verbunden und erlaubt dem Rotorblatt Schlag- und Schwenkbewegungen durchzuführen, wobei diese Bewegungen durch flexible Abschnitte erreichbar und durch Dämpfungselemente gedämpft sind.

Aus der GB2165026 geht eine Rotorblattkopplungsvorrichtung mit einem "Flexbeam" hervor, welcher auftretende Biege- und Scherkräfte, sowie die Fliehkräft im Rotorbetrieb aufnehmen und aushalten kann. Dieser "Flexbeam" wird durch einen biegesteifen Balken gebildet, welcher teilweise von elastomerem Material der Länge nach und vollständig von einer torsionsweichen Hülle umgeben ist. Ein hoch zugfester Bolzen quert den Innenraum des umhüllten Balken zwischen beidseitig angeordneten Verbindungselementen, welche zur Befestigung am Rotorkopf bzw. am Rotorblatt eingesetzt werden. Damit wird eine Rotorblattkopplungsvorrichtung erreicht, welche gewünschte Torsions- und Biegeeigenschaften aufweist, um einerseits die Einstellung des Blattverstellwinkels um die Rotorblattlängsachse zu erlauben und andererseits die auftretenden Schwenk- und Schlagbewegungen abzudämpfen.

Der Flexbeam bedingt aber eine Vielzahl an Bauteilen und damit ein komplexes Bauteil, welches entsprechend in mehreren Schritten komplex zusammenzubauen ist. Wenn beispielsweise eine höhere Torsionssteifigkeit erforderlich ist, muss der gesamte Flexbeam auseinander gebaut werden, um den Bolzen aus dem Innenraum des mit der Hülle umgebenden Balkens zu entfernen. Nach der Auswechslung des Bolzens muss der Flexbeam wieder schrittweise zusammengesetzt werden. Die Kombination der unterschiedlichen Eigenschaften der Bauteile des Flexbeams führt zu den gewünschten elastischen Eigenschaften. Der komplexe mehrteilige Flexbeam muss somit vollständig zerlegt werden, wenn eine der Eigenschaften verändert werden soll. Die Vielzahl von Einzelteilen muss anschliessend genau aufeinander abgestimmt wieder zusammengefügt werden.

In der DE19620427 wird ein vereinfacht aufgebauter Flexbeam oder Tragholm als Rotorblattkopplungsvorrichtung beschrieben, welcher Flieh-, Querkräfte und Biege- und Torsionsmomente von den Rotorblättern an den Rotorkopf übertragen kann, wobei ein virtuelles Schlag- und Schwenkgelenk gebildet wird, welches eine Einstellung des Blattverstellwinkels um die Rotorblattlängsachse erlaubt.

Der Flexbeam weist verschiedene Abschnitte auf, welche unterschiedliche Biegesteifigkeiten besitzen. Zur Erreichung der unterschiedlichen biegeelastischen Eigenschaften sind Schlitze im Körper des Flexbeams angeordnet, welche teilweise schichtweise mit Elastomeren gefüllt sind. Auch hier ist also ein mehrteiliger Flexbeam vorgesehen, welcher durch gezielte Einbringung von Schlitzen und die unlösbare Befestigung von Elastomerschichten innerhalb der Schlitze ein resultierendes komplexes Bauteil bildet, welches gewünschte elastische Eigenschaften aufweist.

Um die Schwenk- und Schlagbewegungseigenschaften im Rotorbetrieb anzupassen, muss der komplette Flexbeam ausgestauscht werden. Zur Anpassung der Dämpfungseigenschaften kann die Form des Flexbeams nicht einfach verändert werden. Auch die Dämpfungselemente können nicht einfach ausgewechselt werden, da diese aufgrund der hohen Belastungen auf die Rotorblattkopplungsvorrichtung unlösbar mit dem Flexbeamkörper verbunden sein müssen.

Die aus dem Stand der Technik bekannten Flexbeams sind derart komplex ausgebildet, wodurch die notwendige Flexibilität erreichbar ist. Darüber hinaus sind die Flexbeams auch derart stabil ausgeführt, dass die bei der Rotation der Rotorblätter auf die Rotorblattkopplungsvorrichtung wirkenden Fliehkräfte zumindestens teilweise aufgenommen werden können.

### Darstellung der Erfindung

Die vorliegende Erfindung hat sich zur Aufgabe gestellt eine einfach einstellbare Rotorblattkopplungsvorrichtung zu schaffen, welche einfach auswechselbar oder variierbar ist, wobei eine einfache Abstimmung der elastischen Eigenschaften möglich ist.

Eine weitere Aufgabe der vorliegenden Erfindung ist das Fernhalten der direkten Wirkung der Fliehkräfte auf elastische Dämpfungsabschnitte und den Träger selbst. Die Bauteile brauchen nicht mehr derart stabil ausgestaltet sein und werden im Betrieb geschont. Desweiteren ist eine verbesserte Feinabstimmung der Flexibilität bzw. Steifigkeit des Trägers und der Dämpfungsabschnitte möglich.

Durch die offenbarte Ausgestaltung der Rotorblattkopplungsvorrichtung ist eine verbesserte nahezu verzögerungsfreie Übertragung der Blattanstellwinkelsteuerung möglich, da auf einen torsionsweichen Flexbeam verzichtet wird. Bei der erfindungsgemässen Lösung wird die Steuereingabe für das Rotorblatt direkt in einen torsionssteifen Träger geleitet, welcher die Steuerbefehle an den entsprechenden Rotorblatthalter überträgt. Die Rotorblattkopplungsvorrichtung ist in sich torsionssteif ausgebildet.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1a: zeigt eine Aufsicht auf einen Helikopter, während
- Figur 1b: einen Schnitt durch einen Rotorkopf entlang der Schnittlinie A-A gemäss Figur 1a zeigt.
- Figur 2a: zeigt eine perspektivische Ansicht eines Rotorkopfes mit insgesamt fünf Rotorblatthaltern bei weggelassenen Rotorblättern, während
- Figur 2b: eine Aufsicht auf den Rotorkopf gemäss Figur 2a zeigt.
- Figur 3: zeigt eine perspektivische Ansicht eines Rotorblatthalters mit starrem Träger, während
- Figur 4: eine Aufsicht auf des Rotorblatthalters mit starrem Träger gemäss Figur 3 und
- Figur 5: einen Schnitt durch den Rotorblatthalter mit starrem Träger zeigt.
- Figur 6a: zeigt perspektivische Ansicht eines abgewandelten Rotorkopfes mit insgesamt fünf Rotorblatthaltern, während
- Figur 6b: eine perspektivische Ansicht eines abgewandelten Rotorblatthalters mit starrem Träger und zusätzlichem Zugelement und
- Figur 6c: einen Schnitt durch den abgewandelten Rotorblatthalters mit zusätzlichem Zugelement zeigt.

### Beschreibung

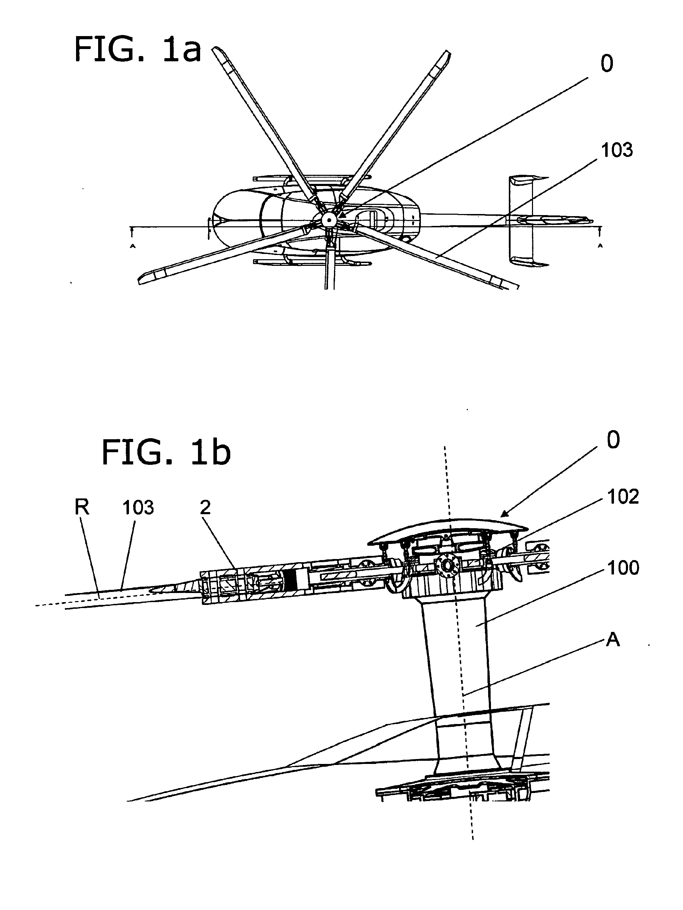

In der Aufsicht gemäss Figur 1a auf einen Hubschrauber ist ein Rotorkopf 0 erkennbar, an welchem eine Mehrzahl von Rotorblättern 103 lösbar befestigt angeordnet ist.

Der Rotorkopf 0 ist an einem Rotormast 100 befestigt, sodass eine Rotation um eine Rotorachse A durchführbar ist. An jeweils einem Rotorblatthalter 2 ist jedes Rotorblatt 103 befestigt und damit mit dem Rotorkopf 0 um die Rotorachse A rotierbar und um eine Rotorblattlängsachse R verschwenkbar gelagert. Eine Drehmomentübertragungseinheit 1, welche ein Rotorkopfzentralstück 102 umfasst, sorgt für die Drehmomentübertragung vom Rotormast 100 auf die einzelnen Rotorblätter 103. Hier beispielhaft dargestellt ist ein Rotorkopf 0 mit fünf Rotorblättern 103, welche lösbar in je einem Rotorblatthalter 2 form- und/oder kraftschlüssig verbunden fixiert sind, sodass Fliehkräfte von bis zu einigen hunderttausend Newton gefahrlos auf jedes Rotorblatt 103 wirken können.

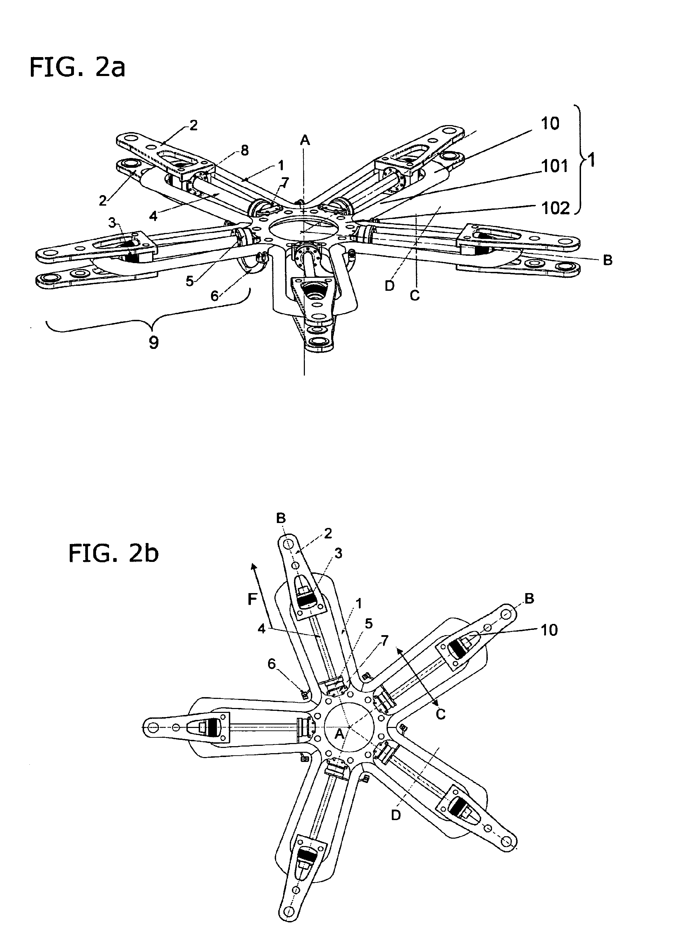

Wie in Figur 2a verdeutlicht, umfasst die Drehmomentübertragungseinheit 1 einen Rotorkopfstern 101, welcher an dem Rotorkopfzentralstück 102 befestigt ist und drehfest mit dem Rotormast 100 verbunden ist. Der Rotorkopfstern 101 ist schlaufenförmig ausgestaltet und hält eine Mehrzahl von Rotorblattkopplungsvorrichtungen 9. Zwischen den schlaufenförmig ausgeführten Armen des Rotorkopfsterns 101 sind die Rotorblattkopplungsvorrichtungen 9 jeweils zwischen einem verjüngten Bereich 10 des Rotorkopfsterns 101 und dem Rotorkopfzentralstück 102 verlaufend, lösbar befestigt angeordnet. Je ein am Rotorkopfzentralstück 102 angeordnetes Lagergehäuse 7 nimmt eine Rotorblattkopplungsvorrichtung 9 auf. Das Lagergehäuse 7 ist am Rotorkopfzentralstück 102 durch Verbindungsmittel befestigt, beispielsweise durch Schrauben.

Die Rotorblattkopplungsvorrichtung 9 umfasst ein Steuerlager 5, einen Träger 4, ein Drucklager 3 und einen Rotorblatthalter 2. Mittels der Rotorblattkopplungsvorrichtung 9 sind die Rotorblätter 103 um die Rotorblattlängsachse R, welche mit der Trägerlängsachse B zusammenfällt, verschwenkbar. Aus Gründen der Übersichtlichkeit sind die Rotorblätter 103 in den Figuren 2 bis 5 weggelassen.

Die Bewegungsrichtung der Rotorblätter 103 in Schlagrichtung C ist in Figur 2a und in Schwenkrichtung D ist in Figur 2b angedeutet. Bewegungen in diese Richtungen werden von den Rotorblattkopplungsvorrichtungen 9 elastisch gedämpft.

Der Rotorblatthalter 2 wird über das Drucklager 3, welches als sphärisches Lager ausgebildet ist, mit dem Rotorblattstern 1 kraft- und/oder formschlüssig verbunden. Der Rotorblatthalter 2 ist über einen blatthalterseitigen Flansch 8 drehfest mit dem Träger 4 verbunden und drehfest mit dem Drucklager 3 verbunden. Die während des Betriebs auf den Rotorblatthalter 2 wirkenden Fliehkräfte F können dadurch vom Rotorblatthalter 2 über das Drucklager 3 in den Rotorkopfstern 1 geleitet werden. Die Rotorblattkopplungsvorrichtung 9 überträgt die Fliehkraft damit in den Rotorkopfstern 1.

Mit einem Steuerarm 6 kann der Blattverstellwinkel um die Rotorblattlängsachse R gesteuert verschwenkt werden, dabei wird der Träger 4 und damit die gesamte Rotorblattkopplungsvorrichtung 9 um die Trägerlängsachse B torsionssteif rotiert.

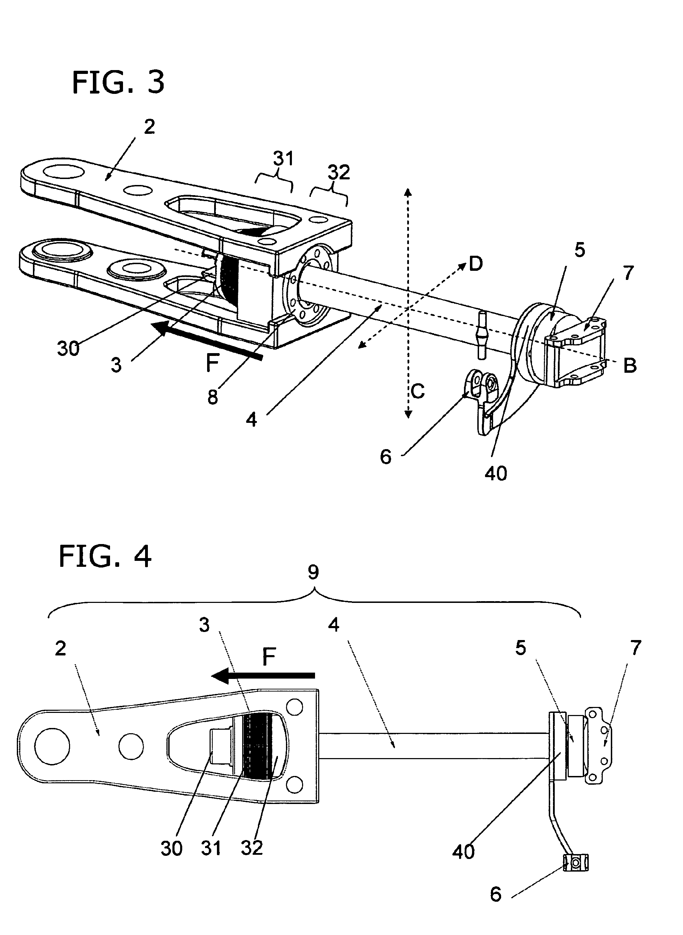

In Figur 3 ist eine perspektivische Ansicht auf die Rotorblattkopplungsvorrichtung 9 dargestellt. Das am Rotorkopfzentralstück 102 fixierte Lagergehäuse 7 nimmt das Steuerlager 5 auf. Dieses Steuerlager 5 ist hier als sphärisches Lager ausgestaltet. Ein am Träger 4 angeordneter rotorachsenseitiger Flansch 40 ist bewegbar im Steuerlager 5 gelagert. Damit ist der Träger 4 schwenk- und schlagbewegbar, sowie drehbar am Rotorkopfzentralstück 102 gelagert. Der Träger 4 ist rohrförmig und torsionssteif ausgebildet, wobei der Träger 4 in Schlagrichtung C und Schwenkrichtung D elastisch ausgeführt ist. Durch geeignete Materialwahl, sowie die geometrische Gestaltung des Trägers 4 kann die Elastizität variiert werden. Der Träger 4 ist mit dem blatthalterseitigen Flansch 8 drehfest verbunden. Über den blatthalterseitigen Flansch 8 ist der Träger 4 mit dem Drucklager 3 verbunden.

Das Drucklager 3 umfasst einen Übertragungselementaufnahme-abschnitt 30, einen flexiblen Abschnitt 31, sowie einen Befestigungsabschnitt 32. Der Übertragungselementaufnahmeabschnitt 30 nimmt den verjüngten Bereich 10 des Rotorkopfsterns 101 auf. Der flexible Abschnitt 31 umfasst einen elastischen Dämpfungsabschnitt mit einer Vielzahl von Elastomerschichten und Metallschichten, welche eine elastische Auslenkung des Drucklagers 3 in Schwenk- und Schlagrichtung erlauben.

Dadurch kann die Rotorblattkopplungsvorrichtung 9 und damit der Rotorblatthalter 2, sowie die daran gekoppelten Rotorblätter 103 Schlag- und Schwenkbewegungen ausführen. Der Rotorblatthalter 2 ist mittels blatthalterseitigem Flansch 8 kraft- und/oder formschlüssig mit dem Befestigungsabschnitt 32 verbunden.

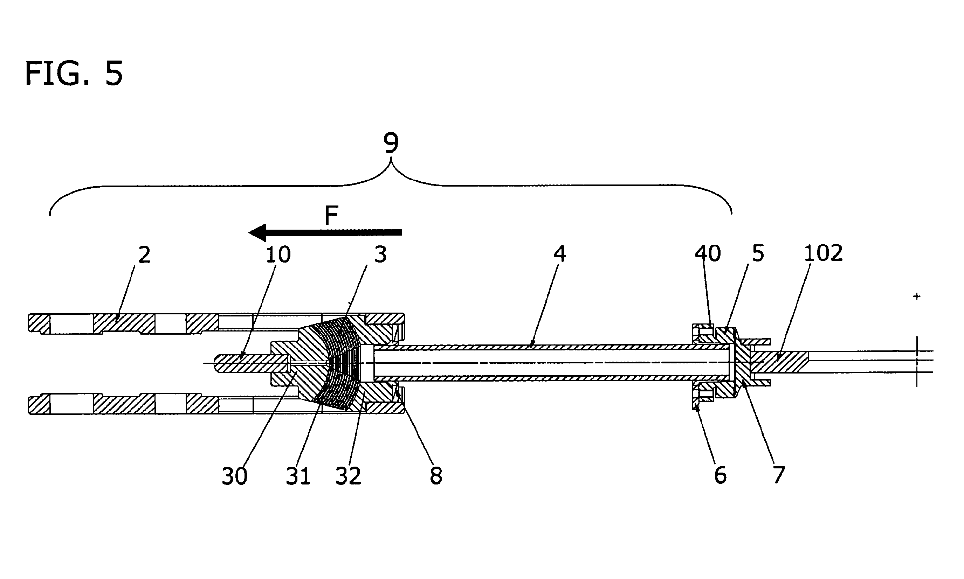

Figur 5 zeigt einen Schnitt durch eine Rotorblattkopplungsvorrichtung 9, welche zwischen dem verjüngten Bereich 10 des Rotorkopfsterns 101 und dem Lagergehäuse 7 am Rotorkopfzentralstück 102 eingespannt ist. Der Träger 4 ist ein zylindrischer Rohrabschnitt, welcher torsionssteif ausgeführt ist und die Steuereingaben auf den Rotorblatthalter 2, über die Trägerlängsachse B überträgt. Der Träger 4 weist einen axialen Gleitsitz im sphärisch ausgeführten Steuerlager 5 auf, um der Verkürzung des Trägers 4 in der Trägerlängsachse B, welche durch die Schlag- sowie Schwenkbewegung hervorgerufen werden, entgegen zu treten.

Die Steifigkeit in der Schlag- wie auch in der Schwenkrichtung C, D des Trägers 4 kann individuell eingestellt werden, indem geometrische Abmessungen und geeignete Werkstoffe mit gewünschten Elastizitätseigenschaften eingesetzt werden.

Durch die Formgebung und Materialwahl des Trägers 4 können die Steifigkeiten in den beiden Achsen C, D unabhängig voneinander eingestellt werden, wobei aufgrund der fliehkraftfreien Lagerung das Material nicht in Richtung Trägerlängsachse B belastet wird, sodass verschiedene Möglichkeiten bestehen.

Der Träger 4 ist im wesentlichen aus Faserverbundwerkstoffen oder einem anderen geeigneten Material gefertigt und bildet ein starres torsionssteifes Strukturelement, welches über die ganze Länge des Trägers 4 schlag- und schwenkbewegbar ist. Das Steuerlager 5 nimmt geringe Bewegungen des Trägers 4 in Schlagrichtung C und Schwenkrichtung D auf, da der Grossteil der Auslenkungen durch das Drucklager 3 aufgenommen wird.

Der Träger 4 ist damit rotormastseitig im Steuerlager 5 und rotorblattseitig im Drucklager 3 abgestützt freitragend gelagert. Bei der Rotation werden Fliehkräfte vom Träger 4 ferngehalten und über den Rotorblatthalter 2 auf den Rotorkopfstern 101 übertragen. Der Träger 4 ist torsionssteif ausgeführt und die Verschwenkung um die Trägerlängsachse B wird durch Verschwenkung des gesamten Trägers 4 durchgeführt. Durch die Auslenkung des Steuerarms 6, wird der Träger 4 um die Trägerlängsachse B verschwenkt.

Da auf den Träger 4 keine Fliehkräfte wirken, brauchen bei der Herstellung des Trägers 4 nur die biegeelastischen Eigenschaften beachten und an die Vorgaben angepasst werden.

Der Rotorkopfstern 101 ist in der Schwenkrichtung D steif ausgelegt und überträgt einerseits das Antriebsmoment vom Rotorkopf 0 auf das Rotorblatt 103 und andererseits die im Rotorbetrieb wirkenden Rotorblattfliehkräfte F auf das Rotorkopfzentralstück 102.

Damit der Rotorkopfstern 101 separat gefertigt werden kann, wird meist eine Trennstelle zwischen dem Rotorkopfstern 101 und dem Rotorkopfzentralstück 102 des Rotorkopfes 0 eingebaut. Der schlaufenförmige Rotorkopfstern 101 wird dann kraft- und/oder formschlüssig mit dem Rotorkopfzentralstück 102 verbunden.

Dadurch, dass die Fliehkraft nicht direkt auf den Träger 4 bzw. auf das sphärische Drucklager 3 wirkt, ist es möglich, die Steifigkeit der einzelnen Achsen voneinander getrennt einzustellen. Der erfindungsgemässe Rotorkopf 0 kann grundsächlich sowohl mit einer hohen als auch geringen Schwenksteifigkeit ausgestaltet werden, wobei die Schlag- und Schwenksteifigkeit nahezu unabhängig voneinander konstruktiv voreinstellbar ist.

Mit Hilfe des erfindungsgemässen Trägers 4 ist es des weiteren möglich, die gesamte Ansteuerung des Rotorblattes 103 fliehkraftfrei, d.h. von dem im laufenden Rotorbetrieb auf die Rotorblätter 103 wirkenden sehr hohen Fliehkräfte unbelastet, zu steuern und den Rotorkopf 0 mittels der entsprechenden Federkonstanten, den geforderten Bedürfnissen anzupassen. Diese vorteilhafte Wirkung ist insbesondere bei mehrblättrigen Rotoren sehr einfach zu erzielen.

Der Rotorkopfstern 1 ist in der Rotationsebene der Rotorblätter 103 mit dem verjüngten Bereich 10 ausgebildet. Neben der Aufnahme der Schlagbewegung durch die elastische Rotorblattkopplungsvorrichtung 9, kann auch der Rotorkopfstern 1 im verjüngten Bereich 10 elastische Verbiegungen aufnehmen. Damit kann die Schlag- und die Schwenkgelenksteifigkeit des gesamten Rotorkopfes 0 einerseits durch Variation der Elastizität der Rotorblattkopplungsvorrichtung 9 bzw. des Trägers 4 und andererseits durch Variation der Elastizität des Rotorkopfsterns 1 eingestellt werden. Der Rotorkopfstern 1, welcher in Faserverbundwerkstoffen wie aber auch aus metallischen Legierungen gefertigt werden kann, ist in der Schwenkrichtung steif ausgebildet.

Durch die Formgebung und die Materialwahl der flexiblen Abschnittes 31 und des Steuerlagers 5 kann die Steifigkeit in der Schlagrichtung und Schwenkrichtung unabhängig voneinander eingestellt werden.

Durch die Anordnung des Steuerlagers 5 ausserhalb der Schlag und Schwenkgelenke wird ein unerwünschtes "Crosscoupling" der Blattkräfte und Bewegungen bei Schlag- oder Schwenkbewegungen der Rotorblätter 103 vermieden. Der Hauptbeitrag der Schlag- und Schwenkkräfte fällt auf der Höhe des Drucklagers 3 an.

Durch die schlaufenförmige Ausgestaltung des Rotorkopfsterns 101 und die das Drucklager 3 umschliessende Lagerung der Rotorblattkopplungsvorrichtung 9 kann eine niedrige Bauhöhe der eingespannten Rotorblattkopplungsvorrichtung 9 bzw. des gesamten Rotorkopfes 0 erreicht werden. Die elastischen Biegeeigenschaften des Rotorkopfsterns 101 beeinflussen die Biegeelastizität der Rotorblattkopplungsvorrichtung 9.

Versuche haben gezeigt, dass die Torsionsteifigkeit des Trägers 4 derart dimensioniert werden kann, dass sich durch eine minimale Verformung des Trägers 4 keine negativen Einflüsse, auf die Blattansteuerung auswirken können. Dabei hat sich eine Torsionssteifigkeit des Trägers 4 im Bereich von 1500 bis 4000 Nm/rad als geeignet herausgestellt. Mit einem torsionssteif ausgeführten Träger 4 ist damit ein Träger 4 mit einer Torsionssteifigkeit im oben beschriebenen Bereich gemeint.

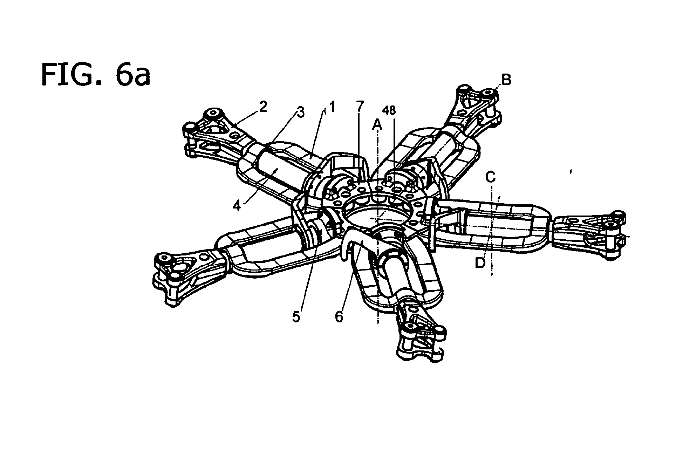

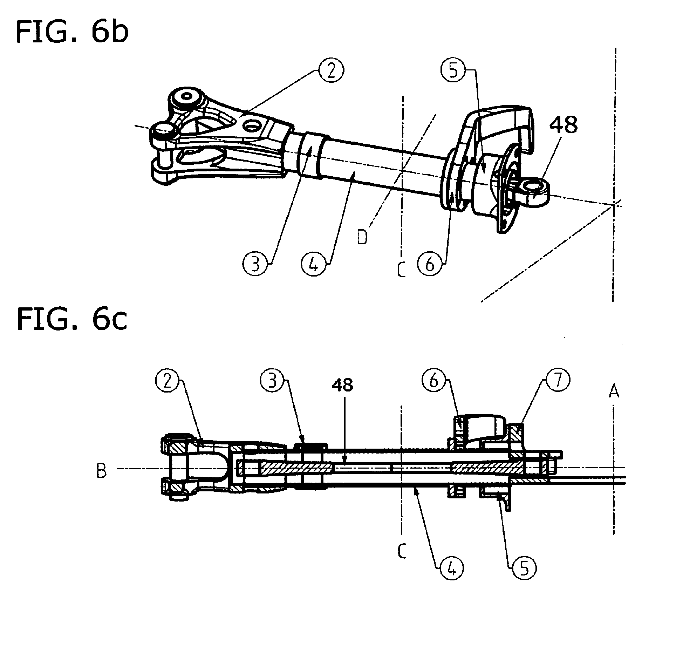

In Figur 6a ist ein abgewandelter Rotorkopf mit insgesamt fünf leicht abgewandelten Rotorblatthaltern gezeigt. Es ist ein torsionsweiches Zugelement 48 den Innenraum des Trägers 4 vollständig querend angeordnet. Der Rotorblatthalter 2 wird über das integrierte, innenliegende torsionsweiche Zugelement 48 mit der Drehmomentübertragungseinheit 1 bzw. dem Rotorblattstern 1 kraftschlüssig, sowie mittels Bolzen oder anderen geeigneten Verbindungselementen verbunden, um die Fliehkraft des Rotorblatts 103 direkt in die Drehmomentübertragungseinheit 1 zu leiten. Der Rotorblatthalter 2 ist drehfest mit dem Drehmomentrohr 4 verbunden. Die Fliehkraft des Rotorblatts 103 wird über das torsionsweiches Zugelement 48, welches im Innern des Trägers 4 angebracht ist, vom Rotorblatthalter 2 direkt in die Rotornabe geleitet. Somit kann die Rotorblattkopplungsvorrichtung 9 noch höhere Fliehkräfte aufnehmen.

Im Schnitt der Figur 6b ist das den hohlen rohrfrömigen Träger 4 vollständig querende torsionsweiche Zugelement 48 zwischen dem Drucklager 3 und dem Steuerlager 5 verlaufend erkennbar.

### Bezugszeichenliste

- 0: Rotorkopf
100 Rotormast
A Rotorachse
103 Rotorblatt
R Rotorblattlängsachse
1 Drehmomentübertragungseinheit
101 Rotorkopfstern
102 Rotorkopfzentralstück
10 verjüngter Bereich
11 Schlaufenartiger Bereich
- 2: Rotorblatthalter
- 3: Drucklager (sphärisch)
30 Übertragungselementaufnahmeabschnitt
31 flexibler Abschnitt
32 Befestigungsabschnitt
- 4: Träger
40 Rotorachsenseitiger Flansch
48 Zugelement
B Trägerlängsachse
- 5: Steuerlager (sphärisch)
- 6: Steuerarm (kollektive Blattverstellung)
- 7: Lagergehäuse
- 8: Blatthalterseitiger Flansch
- 9: Rotorblattkopplungsvorrichtung
- C: Schlagrichtung
- D: Schwenkrichtung

## Patentansprüche

1. Rotorblattkopplungsvorrichtung (9), umfassend einen Träger (4) und einen daran befestigten Rotorblatthalter (2) zur Aufnahme mindestens eines Rotorblattes (103),
**dadurch gekennzeichnet, dass**
der Träger (4) torsionssteif ausgebildet ist und fliehkraftfrei zwischen einem Drucklager (3) und einem Steuerlager (5) in Schwenk- und Schlagrichtung elastisch verbiegbar gelagert ist, wobei Fliehkräfte von der Rotorblattkopplungsvorrichtung (9) auf eine Drehmomentübertragungseinheit (1) übertragbar sind und
die gesamte Rotorblattkopplungsvorrichtung (9) um eine Trägerlängsachse (B) torsionsfrei verschwenkbar gelagert ist.

2. Rotorblattkopplungsvorrichtung (9) gemäss Anspruch 1, wobei das Drucklager (3) und das Steuerlager (5) als sphärische Lager ausgebildet sind.

3. Rotorblattkopplungsvorrichtung (9) gemäss Anspruch 2, wobei das Drucklager (3) einen Übertragungselementaufnahmeabschnitt (30), einen flexiblen Abschnitt (31) und einen Befestigungsabschnitt (32) aufweist.

4. Rotorblattkopplungsvorrichtung (9) gemäss Anspruch 3, wobei der flexible Abschnitt (31) eine Mehrzahl von alternierenden Elastomerschichten und Metallschichten umfasst.

5. Rotorblattkopplungsvorrichtung (9) gemäss einem der vorangehenden Ansprüche, wobei der Träger (4) durch einen axialen Presssitz im Steuerlager (5) beigeelastisch in Schwenk- und Schlagrichtung gelagert ist.

6. Rotorblattkopplungsvorrichtung (9) gemäss einem der vorangehenden Ansprüche, wobei der Träger (4) über einen blatthalterseitigen Flansch (8) form- und/oder kraftschlüssig mit dem Rotorblatthalter (2) und dem Drucklager (3) verbunden ist.

7. Rotorblattkopplungsvorrichtung (9) nach Anspruch 1, wobei das Steuerlager (5) des Trägers (4) mittels eines Lagergehäuses (7) an der Drehmomentübertragungseinheit (1) befestigt ist.

8. Rotorblattkopplungsvorrichtung (9) gemäss Anspruch 7, wobei der Rotorblatthalter (2) Fliehkräfte über das Drucklager (3) auf die Drehmomentübertragungseinheit (1) eines Rotorkopfes (0) überträgt.

9. Rotorblattkopplungsvorrichtung (9) gemäss Anspruch 7, wobei die Rotorblattkopplungsvorrichtung (9) torsionssteif und biegeelastisch zwischen einem Rotorkopfstern (101) und einem Rotorkopfzentralstück (102) der Drehmomentübertragungseinheit (1) aufgespannt anordbar ist.

10. Rotorblattkopplungsvorrichtung (9) gemäss Anspruch 9, wobei das Drucklager (3) mit einem verjüngten Bereich (10) des Rotorkopfsterns (101) zusammenwirkt.

11. Rotorblattkopplungsvorrichtung (9) gemäss einem der vorhergehenden Ansprüche, wobei der Träger (4) rohrförmig und torsionssteif ausgebildet ist und in Schlagrichtung (C) und Schwenkrichtung (D) elastisch ausgeführt ist

12. Rotorblattkopplungsvorrichtung (9) gemäss einem der vorhergehenden Ansprüche, wobei ein Zugelement 48 zwischen dem Drucklager 3 und dem Steuerlager 5 verlaufend und den rohrförmig ausgebildeten Träger 4 vollständig querend angeordnet ist.
